# EUROPÄISCHE PATENTSCHRIFT

(11) **EP 0 946 661 B1**
(45) Veröffentlichungstag und Bekanntmachung des Hinweises auf die Patenterteilung: **30.07.2003**
(21) Anmeldenummer: 97954742.9
(22) Anmeldetag: 12.12.1997
(51) Int. Cl.: C09D 11/02, B41M 3/14, B42D 15/00

(54) **DRUCKFARBE FÜR SICHERHEITSMARKIERUNG AUF EINEM DATENTRÄGER**
PRINTING INK FOR SAFE MARKING ON A DATA CARRIER
ENCRE D'IMPRIMERIE POUR MARQUAGE DE SECURITE SUR UN SUPPORT DE DONNEES

(30) Priorität: 20.12.1996 DE 19653423
(43) Veröffentlichungstag der Anmeldung: 06.10.1999
(73) Patentinhaber: Giesecke & Devrient GmbH, 81677 München (DE)
(72) Erfinder: MÜRL, Gerhard, D-83512 Wasserburg (DE)
(74) Vertreter: Klunker . Schmitt-Nilson . Hirsch
(86) Internationale Anmeldenummer: EP9707009
(87) Internationale Veröffentlichungsnummer: WO98028374

(56) Entgegenhaltungen:
- EP-A- 0 263 446
- EP-A- 0 552 047
- WO-A-93/23251
- GB-A- 1 534 403

## Beschreibung

Die Erfindung betrifft eine Druckfarbe mit einem IR-absorbierenden Zusatzstoff und ein mit dieser Farbe bedrucktes Dokument.

Datenträger, wie Dokumente, insbesondere Wertdokumente, wie beispielsweise Identifikationskarten, Tickets, Pässe, Banknoten, Wertpapiere oder ähnliches, sowie andere Wertgegenstände werden zur Absicherung vor Fälschung oder Verfälschung mit Sicherheitsmerkmalen versehen. Im wesentlichen werden dabei zwei Gruppen von Sicherheitsmerkmalen unterschieden, wobei die erste Gruppe die sogenannten "Humanmerkmale" umfaßt, die so ausgebildet sind, daß die Echtheit der Wertdokumente oder der Wertgegenstände durch einfache Sinneswahrnehmung erkannt werden kann. Unter diese Gruppe fallen insbesondere das Vorsehen optisch variabler Farben auf den Wertdokumenten oder Wertgegenständen sowie das Aufbringen von Hologrammen.

In einer zweiten Gruppe, welche die sogenannten "Maschinenmerkmale" umfaßt, werden den Wertdokumenten Merkmale zugeordnet, die üblicherweise maschinell, d.h. nur mit Hilfe von Sensoren erfaßt werden können. Im Wertpapierbereich haben sich dabei insbesondere magnetisch oder elektrisch detektierbare Merkmale durchgesetzt. Darüber hinaus sind auch optisch erkennbare Markierungen von Sicherheitsdokumenten bekannt, bei denen jedoch die Wellenlänge mit der der Sensor die Markierung erfassen kann außerhalb des visuell wahrnehmbaren Spektralbereichs, z.B. im Infraroten (IR) liegt.

Bei den heute üblicherweise verwendeten Sensoren erfolgt die Detektion einer solchen IR-absorbierenden Markierung dadurch, daß das Dokument mit einer IR-emittierenden Lichtquelle beleuchtet wird und die Remission, d.h. also das aufgrund dieser Beleuchtung vom Dokument bzw. der Markierung ausgehende Licht der Einstrahlungswellenlänge gemessen wird. Ein Dokument bzw. eine aufgedruckte Markierung gilt als IR-absorbierend, wenn ein bestimmter, festgelegter Remissionswert unterschritten wird. Als Schwelle, ab der ein Dokument bzw. die Markierung als IR-absorbierend gilt, kann beispielsweise ein Remissionswert von 50 % festgelegt werden.

Um die obengenannten Remissionswerte zu erreichen bzw. zu unterschreiten, muß ein Dokument eine bestimmte Menge des IR-absorbierenden Zusatzstoffes, z.B. in einer seiner Druckfarben, aufweisen.

Zur Kennzeichnung von Datenträgern ist aus der GB 1 534 403 ein Sicherheitsdokument bekannt, das mit zwei im sichtbaren Spektralbereich identisch erscheinenden Farben bedruckt wird, wobei sich die beiden Farben in ihrem Infrarot-Absorptionsverhalten unterscheiden. Hierzu wird beispielsweise einer pigmentierten Druckfarbe als IR-absorbierender Zusatzstoff Ruß zugesetzt. Die Zugabe von Ruß zu Farben führt einerseits aber dazu, daß diese dunkler bzw. "schmutziger" wirken, andererseits ist es zur ausreichenden Kennzeichnung der Druckfarben erforderlich, hinreichend viel Ruß in die Druckfarbe zuzugeben, so daß das Abdunkeln bzw. "Verschmutzen" der Druckfarben bei Verwendung von Ruß als IR-absorbierender Zusatzstoff unvermeidbar ist, und die Druckfarbe in ihrer sichtbaren Farbwirkung wesentlich beeinträchtigt wird. Daraus resultiert unmittelbar, daß nur eine sehr begrenzte Farbpalette von IR-absorbierenden Druckfarben hergestellt werden kann, wobei diese Farbpalette im wesentlichen die sogenannten "schmutzig-braunen" Töne umfaßt.

Um diesen Nachteil zu vermeiden, wurde in der EP 0 553 614 A1 bereits vorgeschlagen, statt Ruß als IR-absorbierenden Zusatzstoff sogenannte Phthalocyanine zu verwenden, die im wesentlichen transparent oder kaum sichtbar sind. Diese Phthalocyanine haben jedoch den Nachteil, daß sie durch ein komplexes chemisches Verfahren hergestellt werden müssen.

Die Aufgabe der vorliegenden Erfindung besteht demgemäß darin, eine Druckfarbe vorzuschlagen, die einen IR-absorbierenden Zusatzstoff aufweist, der kostengünstig und einfach verfügbar ist und die Druckfarbe im optischen Spektralbereich lediglich in geringem Maße beeinflußt.

Diese Aufgabe wird durch die im kennzeichnenden Teil des Anspruchs 1 angegebenen Merkmale gelöst.

Der Erfindung liegt die Erkenntnis zugrunde, daß Ruß- und Graphitpartikel, die beide aus elementarem Kohlenstoff aufgebaut sind, im visuellen Spektralbereich nahezu die gleiche Farbwirkung haben. Darüber hinaus zeigen Messungen im IR, daß beide Partikelarten in ihrem Absorptionsverhalten im IR nur unerheblich voneinander abweichen. Überraschenderweise hat sich jedoch herausgestellt, daß die visuelle Beeinflussung einer Druckfarbe, die durch die Zugabe von Graphit zu dieser Farbe verursacht wird, deutlich geringer ist als die Beeinflussung, die bei der Zugabe der gleichen Menge Ruß entsteht. Unter der Berücksichtigung der Tatsache, daß eine Erhöhung der Menge des zugegebenen IR-absorbierenden Zusatzstoffes unmittelbar zu einer verstärkten IR-Absorption der Druckfarbe führt, ergibt sich aus dieser Erkenntnis, daß für einen fest vorgegebenen Farbton wesentlich mehr Graphit zugegeben werden kann als dies im Falle von Ruß als IR-absorbierendem Zusatzstoff möglich wäre, so daß durch die Verwendung von Graphit als IR-absorbierendem Zusatzstoff für einen gegebenen Farbton eine erheblich höhere IR-Absorption erzeugt werden kann als bei der Zugabe von Ruß.

Üblicherweise werden die Farbtöne, mit denen ein Dokument versehen werden soll, vorgegeben und enthalten keinerlei IR-absorbierende Zusatzstoffe. Wenn nun dieser Farbton zumindest teilweise mit IR-absorbierenden Eigenschaften erzeugt werden soll, ist es mit dem erfindungsgemäßen Zusatzstoff möglich, diesen vorgegebenen Farbton nachzustellen, indem eine neue Farbrezeptur entwickelt wird, die den erfindungsgemäßen, IR-absorbierenden Zusatzstoff in Gewichtsanteilen von weniger als 7 %, bevorzugt jedoch weniger als 5 %, bezogen auf das Gesamtgewicht der Farbe, enthält. In einer besonders bevorzugten Ausführungsform enthält die erfindungsgemäße Farbe weniger als 3 Gew.% des Zusatzstoffes. Bei der Zugabe von Graphit in den genannten Anteilen lassen sich Druckfarben herstellen, die eine IR-Remission von weniger als 50 % aufweisen und somit für den verwendeten Sensor als IR-absorbierend gelten.

Obwohl es grundsätzlich möglich ist, die IR-absorbierende Druckfarbe dadurch herzustellen, daß das Graphitpulver unmittelbar in der gewünschten Menge einer Druckfarbe zugegeben wird, hat es sich als vorteilhaft erwiesen, zunächst als Halbzeug eine "Paste" herzustellen, in der das Graphitpulver bereits homogen vermischt in einem Bindemittel vorliegt. Zur Herstellung dieser Paste wird das Graphitpulver zum Beispiel zusammen mit einer bindemittelhaltigen Transparent- oder Deckweißfarbe und einem Verdünner in einem Mischer oder Dispergierapparat so lange gemischt oder dispergiert, bis eine Paste entsteht, in der das Graphitpulver homogen verteilt ist. Nach einer anderen Methode kann das Graphitpulver auch unmittelbar in einem geeigneten Bindemittel - gegebenenfalls unter Zusatz von Lösemittel - über Mischung oder Dispergierung zu einer homogenen Paste verarbeitet werden.

Die den IR-absorbierenden Graphit enthaltende Paste kann unmittelbar zur Herstellung der IR-absorbierenden Druckfarbe verwendet oder zur späteren Verwendung gelagert werden. Bei der Herstellung der Druckfarbe werden die gewünschten Anteile der Paste mit einer Basisfarbe sowie gegebenenfalls weiteren Anteilen von Transparent- oder Deckweißfarbe gemischt, so daß die IR-absorbierende Druckfarbe entsteht.

Die so hergestellte Druckfarbe kann nun dazu verwendet werden, Dokumente oder andere Wertgegenstände zu bedrucken, um diese mit einem IR-absorbierenden Merkmalstoff zu versehen.

Weitere Vorteile und vorteilhafte Ausgestaltungen der Erfindung werden anhand der nachfolgenden Figurenbeschreibung dargelegt. Es zeigen im einzelnen:
- Fig. 1: die schematisierte Herstellung einer erfindungsgemäßen Druckfarbe,
- Fig. 2: ein mit der erfindungsgemäßen Druckfarbe versehenes Wertdokument.

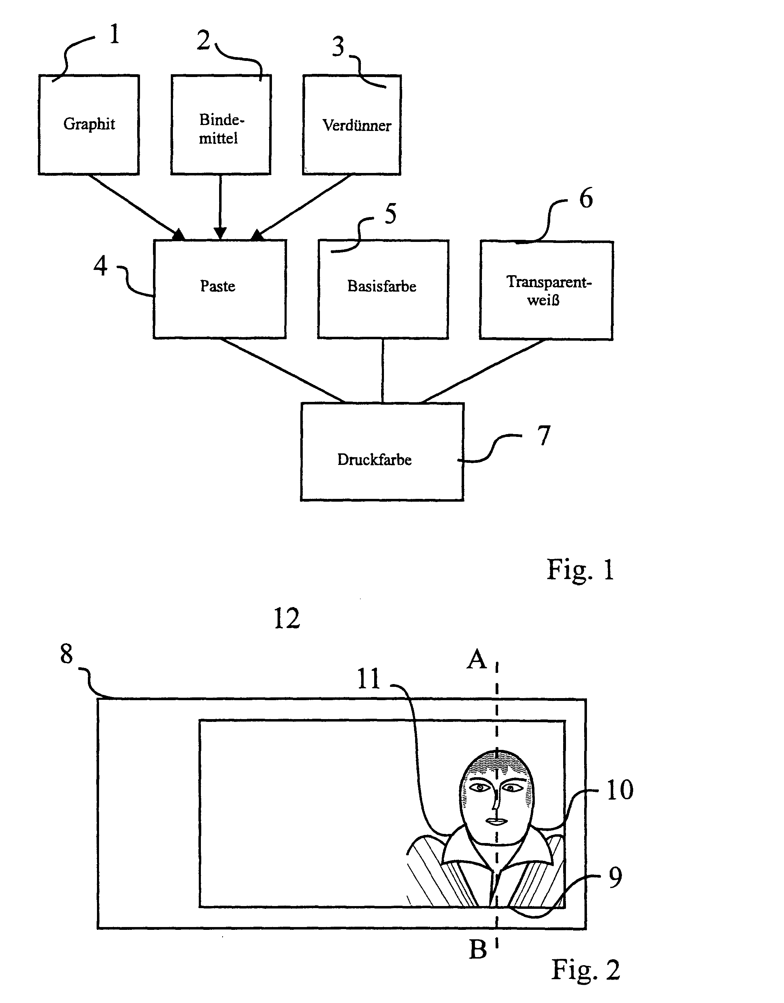

Fig. 1 zeigt in einer Prinzipdarstellung die Vorgehensweise zur Herstellung der erfindungsgemäßen Druckfarbe. Dabei wird in einem ersten Verfahrensschritt ausgehend von einem Graphitpulver 1 und einem Bindemittel 2, das beispielsweise in einer Deck- oder Transparentweißfarbe vorliegt, sowie einem Verdünner 3 eine Paste 4 hergestellt, die als Ausgangsmaterial für die Herstellung der Druckfarbe dient. Zur Herstellung der Paste werden die Ausgangsstoffe so lange miteinander in einem Mischer vermengt, bis das Graphitpulver in der gewünschten Menge homogen in der Paste verteilt ist.

Prinzipiell ist man bei der Herstellung der Paste frei in der Menge des zugegebenen Graphits, jedoch wird vorteilhafterweise das Graphitpulver in einer Menge von 5 bis 30 Gew. %, der Verdünner in einer Menge von 0 bis 20 Gew. % und das Bindemittel in einer Menge von 60 bis 90 Gew. % zugegeben.

Erst in einem zweiten Verfahrensschritt wird ausgehend von der Paste 4 und weiteren Zusatzstoffen die Druckfarbe hergestellt, mit der das Dokument bedruckt werden soll. Hierzu wird der geeignete Anteil der Paste 4 mit einer Basisfarbe 5 und gegebenenfalls einer Deck- oder Transparentweißfarbe 6 so lange vermischt, bis eine homogene Druckfarbe 7 entsteht, die nun die gewünschten IR-absorbierenden Eigenschaften aufweist. Die Anteile der Paste 4, der Basisfarbe 5 und der Deck- oder Transparentweißfarbe 6 können dabei je nach Anwendungsfall und Farbe variieren. Jedoch wird die Paste 4 üblicherweise in einem Verhältnis zugegeben, das gewährleistet, daß der prozentuale Anteil des IR-Absorbers, bezogen auf das Gesamtgewicht der entstehenden Druckfarbe, kleiner ist als 7 %.

Anhand konkreter Beispiele wird im folgenden nochmals die Vorgehensweise zur Herstellung der erfindungsgemäßen Druckfarbe erläutert.

Zur Herstellung einer ersten Paste werden die Anteilstoffe
7,5 % Graphitpulver
10 % Verdünner
82,5 % Transparent- oder Deckweißfarbe
zusammen in einem Mischer so lange gemischt, bis das Graphitpulver homogen in der Mischung verteilt ist und eine Paste entsteht.

Die Paste wird anschließend dazu verwendet, die erfindungsgemäße Druckfarbe herzustellen, wobei
240 g Basisfarbe Rot oder Orange
30 g Transparentweißfarbe
30 g der obengenannten 7,5 %igen Graphitpaste
vermischt werden bis sich eine homogene Mischung ergibt, die einen schwach schmutzig-roten bzw. schwach schmutzig-orangen Farbeindruck vermittelt.

Zur Herstellung einer zweiten Paste werden die Anteilstoffe
25 - 30 % Graphitpulver
70 - 75 % Firnis
zusammen in einem Mischer so lange gemischt, bis das Graphitpulver homogen in der Mischung verteilt ist und eine Paste entsteht.

Diese Paste wird anschließend dazu verwendet, die erfindungsgemäße Druckfarbe herzustellen, wobei
z.B. 220 g Basisfarbe Rot oder Orange
50 g Transparentweißfarbe
50 g der obengenannten 25 - 30 %igen Graphitpaste
vermischt werden bis sich eine homogene Mischung ergibt, die einen schwach schmutzig-roten bzw. schwach schmutzig-orangen Farbeindruck vermittelt.

Eine der oben genannten IR-absorbierenden Druckfarben wird auf einen Datenträger zusammen oder nacheinander mit einer Druckfarbe desselben Farbtons aufgebracht, die nicht IR-absorbierend ist. Die nicht IR-absorbierende Farbe wird ausgehend von der gleichen Basisfarbe Rot oder Orange mit Hilfe eines sogenannten "IR-Transparentschwarz" abgemischt bis der gleiche Farbton entsteht, den die verwendete IR-absorbierende Druckfarbe aufweist.

Neben den in den Beispielen genannten Basisfarben Rot und Orange können selbstverständlich auch andere Farben als Basisfarben dienen.

In Fig. 2 ist ein Wertdokument 8, in diesem Fall eine Banknote, gezeigt, die mit Hilfe der erfindungsgemäßen Druckfarbe mit einem für das menschliche Auge nicht sichtbaren, aber maschinenlesbaren Merkmal versehen worden ist. Zu diesem Zweck ist ein im Stichtiefdruckverfahren aufgebrachtes Portrait 9 in zwei Anteile 10 und 11 aufgeteilt, wobei der Anteil 10 des Portraits in einer nicht IR-absorbierenden Druckfarbe und der Anteil 11 in einer im Infraroten absorbierenden Druckfarbe aufgedruckt ist, ohne daß im visuellen Spektralbereich ein Unterschied zwischen den beiden Farben erkannt werden könnte. Die Trennlinie der Anteile ist dabei durch die von A nach B verlaufende, gestrichelt dargestellte Linie angedeutet. Mit Hilfe eines geeigneten Sensors kann die Echtheit der Banknote dadurch erkannt werden, daß in der Prüfmaschine festgestellt wird, daß der Anteil 11 im Infraroten absorbierend ist.

Darüber hinaus gibt es eine Vielzahl von Möglichkeiten, die erfindungsgemäße Druckfarbe alleine oder zusammen mit einer im Farbton gleichen, jedoch nicht im Infraroten absorbierenden Druckfarbe einzusetzen, um Datenträger, insbesondere Dokumente, zu kennzeichnen bzw. vor Fälschung oder Verfälschung zu schützen. So ist es beispielsweise möglich, die nicht IR- absorbierende Druckfarbe flächig als Untergrunddruck aufzubringen und darüberliegend die IR-absorbierende Druckfarbe in einem Muster aufzubringen, so daß visuell keinerlei Kennzeichnung erkannt werden kann. Erst mit Hilfe eines IR-Sensors kann das Muster der IR-absorbierenden Druckfarbe vor dem Hintergrund der nicht absorbierenden Druckfarbe erkannt werden. Als Muster eignen sich insbesondere Barcodes, wertspezifische Darstellungen, Texte, Zeichen, Muster oder Bilder, die dann mit Hilfe einer geeigneten Auswerteeinheit zum Nachweis der Echtheit des Dokumentes ausgewertet werden können.

Selbstverständlich ist es auch möglich, eine IR-absorbierende Druckfarbe in Form eines obengenannten Musters auf einen Teilbereich des Datenträgers aufzubringen, und lediglich die Flächenbereiche, die nicht von dem Muster der IR-absorbierenden Druckfarbe ausgefüllt sind, mit der nicht IR-absorbierenden Druckfarbe abzudecken, so daß wiederum im visuell erkennbaren Spektralbereich kein Muster erkennbar ist, während sich das Muster im Infraroten deutlich detektieren läßt.

Als Druckverfahren kommen alle gängigen Druckverfahren, wie beispielsweise Stahlstich-Tiefdruck, Offsetdruck, Transferdruck, Flexodruck alleine oder in Kombination miteinander in Betracht.

## Patentansprüche

1. Druckfarbe zur Verwendung als Sicherheitsmarkierung auf einem Datenträger, die Farbmittel und einen Infrarot-absorbierenden Zusatzstoff aufweist und deren visuell wahrgenommener Farbeindruck im wesentlichen durch das Farbmittel gegeben ist, **dadurch gekennzeichnet, daß** der Infrarot-absorbierende Zusatzstoff Graphit ist.

2. Druckfarbe nach Anspruch 1, **dadurch gekennzeichnet, daß** der Graphit in der Druckfarbe in einem Anteil von weniger als 7 Gew.%, bezogen auf das Gesamtgewicht der Druckfarbe, vorliegt.

3. Druckfarbe nach Anspruch 2, **dadurch gekennzeichnet, daß** der Graphit in einem Anteil von weniger als 5 Gew. % vorliegt.

4. Druckfarbe nach Anspruch 3, **dadurch gekennzeichnet, daß** der Graphit in einem Anteil von weniger als 3 Gew.% vorliegt.

5. Datenträger, wie Dokument, insbesondere Banknote, Ausweiskarte, Paß, Scheck oder Aktie, der eine gedruckte Markierung mit einer Druckfarbe aufweist, die ein Farbmittel und einen Infrarot-absorbierenden Zusatzstoff enthält und deren visuell wahrgenommener Farbeindruck im wesentlichen durch das Farbmittel gegeben ist, **dadurch gekennzeichnet, daß** der Infrarot-absorbierende Zusatzstoff Graphit ist.

6. Datenträger gemäß Anspruch 5, **dadurch gekennzeichnet, daß** die Infrarot-absorbierende Druckfarbe in Form eines Musters, Bildes, Logos, Binärcodes oder alphanumerischen Zeichens aufgedruckt ist.

7. Datenträger gemäß einem der Ansprüche 5 oder 6, **dadurch gekennzeichnet, daß** der Graphit in der Infrarot-absorbierenden Druckfarbe in einem Anteil von weniger als 7 %, bezogen auf das Gesamtgewicht der Druckfarbe, vorliegt.

8. Datenträger nach Anspruch 7, **dadurch gekennzeichnet, daß** der Graphit in einem Anteil von weniger als 5 Gew. % vorliegt.

9. Datenträger nach Anspruch 8, **dadurch gekennzeichnet, daß** der Graphit in einem Anteil von weniger als 3 Gew. % vorliegt.

10. Datenträger gemäß einem der Ansprüche 5 bis 9, **dadurch gekennzeichnet, daß** zusätzlich zu der Infrarot-absorbierenden Druckfarbe eine weitere Druckfarbe vorhanden ist, die nicht Infrarot-absorbierend ist und den gleichen Farbton aufweist, wie die Infrarot-absorbierende Druckfarbe.

11. Datenträger nach Anspruch 10, **dadurch gekennzeichnet, daß** die Infrarot-absorbierende Druckfarbe und die nicht Infrarot-absorbierende Druckfarbe zumindest bereichsweise übereinanderliegen.

12. Datenträger nach Anspruch 10, **dadurch gekennzeichnet, daß** die nicht Infrarot-absorbierende Druckfarbe lediglich in solchen Bereichen vorliegt, die nicht von der Infrarot-absorbierenden Druckfarbe abgedeckt sind.

13. Verfahren zur Herstellung einer Farbmittel enthaltenden, Infrarot-absorbierenden Druckfarbe, **gekennzeichnet durch** die Schritte
- Bereitstellen einer Farbmittel enthaltenden Basisfarbe,
- Bereitstellen einer Bindemittel und Graphit enthaltenden Paste,
- Mischen der Basisfarbe mit der Paste.

## Claims

1. A printing ink for use as a security marking on a data carrier, said ink having colorant and an infrared-absorbent additive and its visually perceptible color effect being given substantially by the colorant, **characterized in that** the infrared-absorbent additive is graphite.

2. A printing ink according to claim 1, **characterized in that** the graphite is present in the ink in a proportion of less than 7 wt%, based on the total weight of the ink.

3. A printing ink according to claim 2, **characterized in that** the graphite is present in a proportion of less than 5 wt%.

4. A printing ink according to claim 3, **characterized in that** the graphite is present in a proportion of less than 3 wt%.

5. A data carrier, such as a document, in particular a bank note, ID card, passport, check or share, having a printed marking with a printing ink containing colorant and an infrared-absorbent additive and whose visually perceptible color effect is given substantially by the colorant, **characterized in that** the infrared-absorbent additive is graphite.

6. A data carrier according to claim 5, **characterized in that** the infrared-absorbent ink is printed in the form of a pattern, picture, logo, binary code or alphanumeric character.

7. A data carrier according to one of claims 5 and 6, **characterized in that** the graphite is present in the infrared-absorbent ink in a proportion of less than 7%, based on the total weight of the ink.

8. A data carrier according to claim 7, **characterized in that** the graphite is present in a proportion of less than 5 wt%.

9. A data carrier according to claim 8, **characterized in that** the graphite is present in a proportion of less than 3 wt%.

10. A data carrier according to any of claims 5 to 9, **characterized in that** in addition to the infrared-absorbent ink it bears a further ink that is not infrared-absorbent and has the same tone as the infrared-absorbent ink.

11. A data carrier according to claim 10, **characterized in that** the infrared-absorbent ink and non-infrared-absorbent ink are superimposed at least in certain areas.

12. A data carrier according to claim 10, **characterized in that** the non-infrared-absorbent ink is present only in areas not covered by the infrared-absorbent ink.

13. A method for producing a colorant-containing, infrared-absorbent printing ink, **characterized by** the steps of:
- providing a colorant-containing basic color,
- providing a binder- and graphite-containing paste,
- mixing the basic color with the paste.

## Revendications

1. Encre d'imprimerie à utiliser comme marquage de sécurité sur un support de données, qui présente une substance colorante et une substance d'addition qui absorbe l'infrarouge, et dont l'empreinte de couleur visuellement perceptible est donnée essentiellement par la substance colorante, **caractérisée en ce que** la substance d'addition qui absorbe l'infrarouge est le graphite.

2. Encre d'imprimerie selon la revendication 1, **caractérisée en ce que** le graphite est présent dans l'encre d'imprimerie en une proportion de moins de 7 % en poids, rapportés au poids total de l'encre d'imprimerie.

3. Encre d'imprimerie selon la revendication 2, **caractérisée en ce que** le graphite est présent en une proportion de moins de 5 % en poids.

4. Encre d'imprimerie selon la revendication 3, **caractérisée en ce que** le graphite est présent en une proportion de moins de 3 % en poids.

5. Support de données, comme document, en particulier billet de banque, carte d'identité, passeport, chèque ou action, qui présente un marquage imprimé avec une encre d'imprimerie, qui contient une substance colorante et une substance d'addition qui absorbe l'infrarouge, et dont l'empreinte de couleur visuellement perceptible est donnée essentiellement par la substance colorante, **caractérisé en ce que** la substance qui absorbe l'infrarouge est le graphite.

6. Support de données selon la revendication 5, **caractérisé en ce que** l'encre d'imprimerie absorbant l'infrarouge est imprimée sous la forme d'un motif, d'une image, d'un logo, de codes binaires ou de signes alphanumériques.

7. Support de données selon l'une des revendications 5 ou 6, **caractérisé en ce que** le graphite est présent dans l'encre d'imprimerie absorbant l'infrarouge en une proportion de moins de 7 % en poids, rapportés au poids total de l'encre d'imprimerie.

8. Support de données selon la revendication 7, **caractérisé en ce que** le graphite est présent en une proportion de moins de 5 % en poids.

9. Support de données selon la revendication 8, **caractérisé en ce que** le graphite est présent en une proportion de moins de 3 % en poids.

10. Support de données selon l'une quelconque des revendications 5 à 9, **caractérisé en ce qu'**en plus de l'encre d'imprimerie absorbant l'infrarouge, il y a une autre encre d'imprimerie qui n'absorbe pas l'infrarouge et qui présente la même tonalité que l'encre d'imprimerie absorbant l'infrarouge.

11. Support de données selon la revendication 10, **caractérisé en ce que** l'encre d'imprimerie absorbant l'infrarouge et l'encre d'imprimerie qui n'absorbe pas l'infrarouge sont superposées au moins par zones.

12. Support de données selon la revendication 10, **caractérisé en ce que** l'encre d'imprimerie qui n'absorbe pas l'infrarouge est présent simplement dans des zones qui ne soient pas recouvertes par l'encre d'imprimerie qui absorbe l'infrarouge.

13. Procédé de fabrication d'une encre d'imprimerie qui contient une colorante et qui absorbe l'infrarouge, **caractérisé par** les étapes consistant :
• à préparer une substance colorante de base qui contient une substance colorante,
• à préparer une pâte qui contient un liant et du graphite,
• à mélanger la colorante de base avec la pâte.
